(19) Europäisches Patentamt
European Patent Office
Office européen des brevets

(11) **EP 4 485 785 A1**

(12) **EUROPEAN PATENT APPLICATION**
published in accordance with Art. 153(4) EPC

(43) Date of publication:
**01.01.2025 Bulletin 2025/01**

(21) Application number: **22927605.0**

(22) Date of filing: **22.02.2022**

(51) International Patent Classification (IPC):
**H02M 7/48** (2007.01)

(52) Cooperative Patent Classification (CPC):
**H02M 7/48;** Y02B 70/10

(86) International application number:
**PCT/IB2022/000092**

(87) International publication number:
**WO 2023/161669 (31.08.2023 Gazette 2023/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **NISSAN MOTOR CO., LTD.**
**Kanagawa 221-0023 (JP)**
• **Horse Powertrain Solutions, S.L.U.**
**28108 Alcobendas Madrid (ES)**

(72) Inventors:
• **IKARI, Takayuki**
**Atsugi-shi, Kanagawa 243-0123 (JP)**
• **YAMAGAMI, Shigeharu**
**Atsugi-shi, Kanagawa 243-0123 (JP)**
• **LOVISON, Giorgio**
**Atsugi-shi, Kanagawa 243-0123 (JP)**
• **KUWABARA, Yoshikazu**
**Atsugi-shi, Kanagawa 243-0123 (JP)**

(74) Representative: **Hoefer & Partner Patentanwälte
mbB
Pilgersheimer Straße 20
81543 München (DE)**

(54) **ELECTRIC-POWER CONVERSION METHOD AND ELECTRIC-POWER CONVERSION DEVICE**

(57) A power conversion device (100) has a class-E power conversion circuit (20). The Class-E power conversion circuit (20) has a Class-E inverter circuit (30) and a rectifier circuit (40) connected to the Class-E inverter circuit (30) and rectifying a high-frequency alternating current generated by the Class-E inverter circuit (30) to a direct current or low-frequency AC voltage. The Class-E inverter circuit (30) includes an AC voltage input unit (10) into which an AC voltage is input, a switch (32) for switching the current on/off, an input choke inductor (31) connected to at least one end of the switch (32) and the AC voltage input unit (10), and an LC resonance circuit (34) connected to the rectifier circuit (40). The control unit (50) sets the On-Duty of the switch (32) based on an output current or output power output from the class-E power conversion circuit (20).

FIG. 1

EP 4 485 785 A1

**Description**

TECHNICAL FIELD

The present invention relates to a power conversion method and a power conversion device.

BACKGROUND ART

Conventionally, there has been known an invention that enables a class-E power conversion circuit to operate with high efficiency over a wide input range (Patent Literature 1). The invention described in Patent Literature 1 enables a class-E power conversion circuit to operate with high efficiency over a wide input range by arranging a voltage adjusting means for stabilizing an input voltage of the class-E power conversion circuit between the class-E power conversion circuit and an AC input voltage.

CITATION LIST

PATENT LITERATURE

Patent Literature 1: Japanese Patent Publication No. 2018-196271

SUMMARY OF INVENTION

TECHNICAL PROBLEM

However, in the invention described in Patent Literature 1, it is necessary to provide an additional voltage adjusting means, resulting in increasing the size of a power conversion device.
The present invention has been made in view of the above problem, and an object thereof is to provide a power conversion method and a power conversion device which can operate at high efficiency without increasing the size.

TECHNICAL SOLUTION

The power conversion method according to one aspect of the present invention sets the On-Duty of the switch based on an output current or output power output from the class-E power conversion circuit.

ADVANTAGEOUS EFFECTS

According to the present invention, the power conversion device can operate at high efficiency without increasing in size.

BRIEF DESCRIPTION OF DRAWINGS

[FIG. 1] FIG. 1 is a configuration diagram of a power conversion device 100 according to a first embodiment of the present invention.
[FIG. 2] FIG. 2 is a graph showing a relationship between an input voltage and a switching frequency.
[FIG. 3] FIG. 3 is a graph showing a relationship between an input voltage and a switching frequency.
[FIG. 4] FIG. 4 is a configuration diagram of the power conversion device 100 according to a second embodiment of the present invention.
[FIG. 5] FIG. 5 is a configuration diagram of the power conversion device 100 according to a third embodiment of the present invention.
[FIG. 6] FIG. 6 is a map showing whether the zero voltage switching can be established.
[FIG. 7] FIG. 7 is a configuration diagram of the power conversion device 100 according to a fourth embodiment of the present invention.
[FIG. 8] FIG. 8 is a map showing whether the zero voltage switching can be established.
[FIG. 9] FIG. 9 is a configuration diagram of the power conversion device 100 according to a fifth embodiment of the present invention.
[FIG. 10] FIG. 10 is a map 10 showing whether the zero voltage switching can be established.

DESCRIPTION OF EMBODIMENTS

Embodiments of the present invention will now be described with reference to the drawings. In the description of the drawings, the same parts are denoted by the same reference signs and the description thereof is omitted.

[First Embodiment]

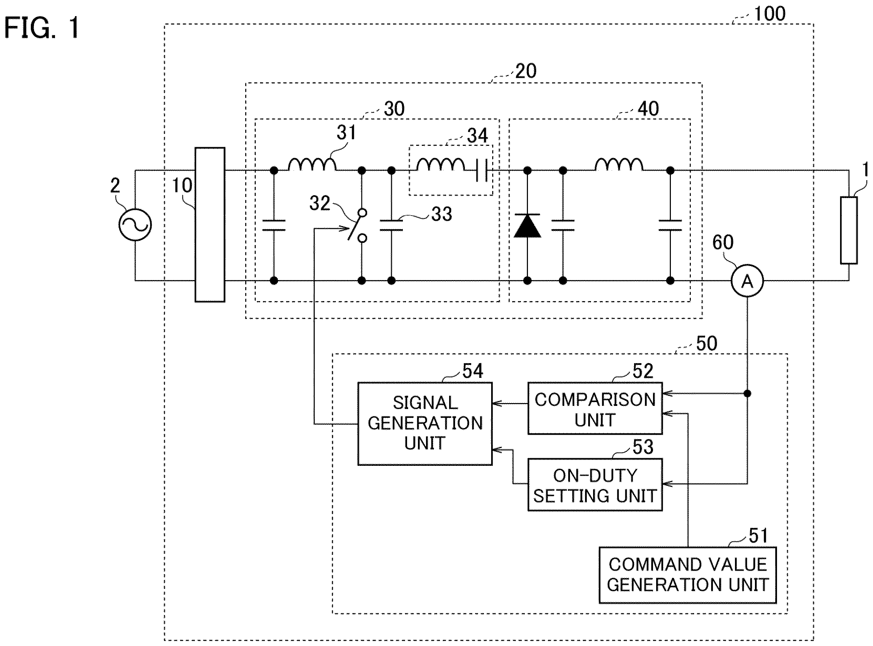

The configuration of the power conversion device 100 according to a first embodiment will be described with reference to FIG. 1. As shown in FIG. 1, the power conversion device 100 includes an AC voltage input unit 10, a class-E power conversion circuit 20, a current sensor 60, and a control unit 50. A load 1 and an AC power supply 2 are connected to the power conversion device 100. The class-E power conversion circuit 20 has a class-E inverter circuit 30 and a rectifier circuit 40.
The class-E inverter circuit 30 has an input choke inductor 31, a switch 32, a shunt capacitor 33 connected in parallel with the switch 32, and an LC resonance circuit 34. A high-frequency alternating current is generated by the switch 32 repeatedly turning the high-frequency on and off. The switch 32 is constituted by, for example, a semiconductor transistor such as a Metal-Oxide-Semiconductor Field-Effect Transistor (MOSFET). A capacitor of a single component may be arranged as the shunt capacitor 33 connected in parallel with the switch 32. However, the capacitor may not be arranged as a separate component by utilizing the parasitic capacitance of the MOSFET used as the switch.

The rectifier circuit 40 rectifies a high-frequency current generated by the class-E inverter circuit 30. The rectifier circuit 40 has a diode, a rectifier side shunt capacitor connected in parallel to the diode, and an output choke inductor. A so-called "class-E rectifier" may be arranged as the rectifier circuit 40. A so-called "class D rectifier" consisting of four diodes connected by a bridge may be arranged as the rectifier circuit 40.

It is generally known that the higher the operating frequency of the class-E power conversion circuit 20, the smaller the inductance and capacitance values required for passive components to be used such as inductors and capacitors. By utilizing this phenomenon, it is possible to decrease the size of the power conversion device 100. However, in order to operate the class-E power conversion circuit 20 at high frequency and high efficiency, it is necessary to reduce a turn-on loss that occurs when switching the switch 32 from off to on.

The turn-on loss of the class-E power conversion circuit 20 occurs due to the principle described below. When the switch 32 is switched from off to on, the shunt capacitor 33 is short-circuited by the switch 32, and the electrostatic energy stored in the shunt capacitor 33 is converted to Joule heat by the switch 32. A switching loss Psw is then expressed by Formula 1 using the capacitance Cs of the shunt capacitor 33 and the voltage Vton at both ends of the switch 32 at the moment when the switch 32 is switched from off to on.

[Mathematical 1]

$$Psw = Cs \times Vton2/2 \qquad (1)$$

The class-E power conversion circuit 20 performs so-called "zero voltage switching (ZVS)" in which the turn-on loss is reduced to zero by using the current of the LC resonance circuit 34 to reduce both end voltages of the switch 32 to zero when the switch 32 is turned off and then turning on the switch 32. The zero voltage switching allows to reduce the loss even when the operating frequency is increased to a higher frequency, thereby making it possible to decrease the size of the power conversion device 100.

However, the zero voltage switching operation of the class-E power conversion circuit 20 is not unconditionally established, and whether or not it is established can be determined by various conditions such as input voltage, output voltage, input current, output current, switching frequency, and On-Duty of the switch 32. If the zero voltage switching is not established, a large turn-on loss occurs in the class-E power conversion circuit 20. Therefore, until now, the class-E power conversion circuit 20 is not used in applications where the input/output conditions change greatly. When it is used, a voltage adjusting means is installed to stabilize the input/output conditions as in the prior art. However, as described above, the installation of the voltage adjusting means leads to the enlargement of the power conversion device.

Therefore, in the present embodiment, the output current of the class-E power conversion circuit 20 is detected, and the On-Duty of the switch control signal is set based on the detected output current. As shown in FIG. 1, the current sensor 60 detects the output current of the class-E power conversion circuit 20. The control unit 50 sets the On-Duty of the switch control signal based on the output current detected by the current sensor 60. Specifically, the control unit 50 includes a command value generation unit 51, a comparison unit 52, an On-Duty setting unit 53, and a signal generation unit 54. As an example, the command value generation unit 51 uses a current value that should be supplied to the load 1 as the output current command value and outputs it to the comparison unit 52. The signal generation unit 54 generates a control signal so that the measured value and the command value become the value, and outputs it to the switch 32. Since these functions constitute a well-known feedback control, a detailed description thereof is omitted. The On-Duty means a ratio of an ON section to a sum of the ON section and an OFF section, that is, the ratio of the ON section in one cycle.

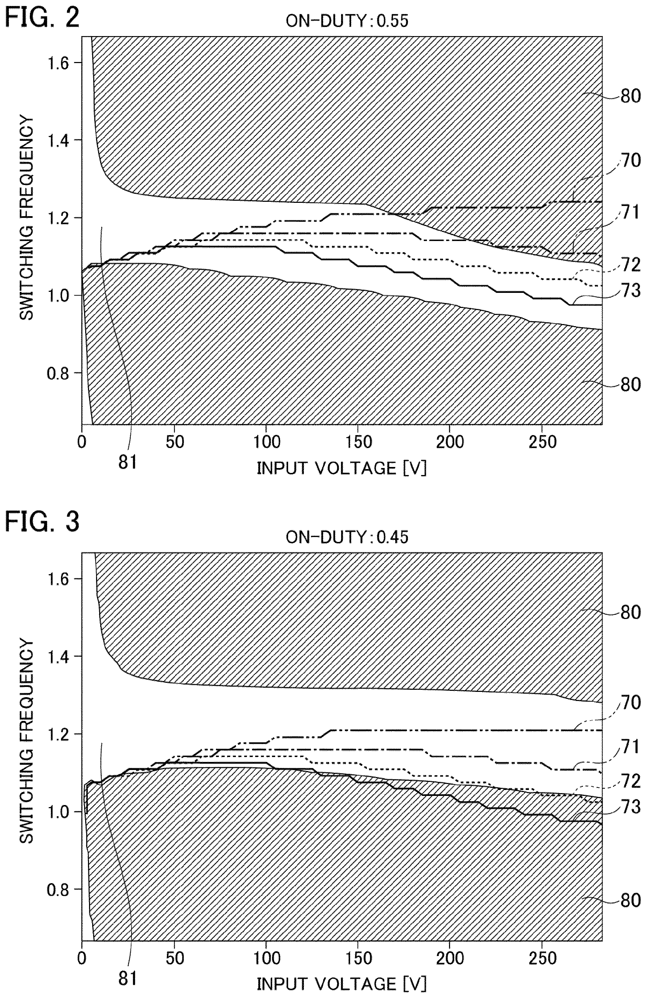

Next, an operation example of the class-E power conversion circuit 20 will be described with reference to FIG. 2 and 3. In FIG. 2, a horizontal axis indicates the input voltage of the class-E power conversion circuit 20, and the vertical axis indicates the switching frequency of the class-E power conversion circuit 20. In FIG. 2, values of the horizontal axis are from 0 V to 283 V, which represent the absolute values in the variation range of the input voltage when the input voltage is 200 V AC. Here, in a power conversion device that draws power from a general AC power system, it is required to control the input current to the highest power factor possible. In the following, unless otherwise specified, the power conversion device 100 will be described as controlling the input current to a high power factor. "Controlling the power factor to a high power factor" means controlling the power factor to approach 1. In the graph shown in FIG. 2, an operation trajectory of the class-E power conversion circuit 20 when the power factor of the input current becomes 1 is superposed on a contour plot of the turn-on loss when the On-Duty is operated at 0.55, that is, the input current becomes sinusoidal like the input voltage.

Reference sign 70 denotes the operation trajectory when the average output current is 2 A, reference sign 71 denotes the operation trajectory when the average output current is 4 A, reference sign 72 denotes the operation trajectory when the average output current is 6 A, and reference sign 73 denotes the operation trajectory when the average output current is 8 A. A region denoted by reference sign 80 is the region in which the zero voltage switching is not established. A region denoted by reference sign 81 indicates that the turn-on loss becomes zero, and is the region in which the zero voltage switching is established under the condition that the voltage Vton at both ends of the switch 32 when it is turned on is zero.

From the graph shown in FIG. 2, it can be seen that as an average output current increases to 2 A (reference sign 70), 4 A (reference sign 71), 6 A (reference sign 72), and 8 A (reference sign 73), a switch driving frequency of the class-E power conversion circuit 20 is required to be shifted to a lower frequency. Under the condition that the On-Duty is 0.55, the operation trajectories of the average output currents of 8 A (reference sign 73) and 6 A (reference sign 72) all pass through the region 81 in which the zero voltage switching is possible between 0 V and 283 V, which is the voltage fluctuation range of 200 V AC, and it can be seen that the zero voltage switching is possible in all regions in response to changes in AC voltages of 50 Hz and 60 Hz. On the other hand, the operation trajectories of the average output current of 2 A (reference sign 70) and 4 A (reference sign 71) partly pass through the region 80 in which the zero voltage switching not established. Therefore, it can be seen that under the conditions of the average output current of 2 A and 4 A, the zero voltage switching cannot be established in all regions in response to the changes of AC input voltages of 50 Hz and 60 Hz.

In FIG. 3, the On-Duty is made smaller than in FIG. 2. Specifically, in FIG. 3, the On-Duty is operated at 0.45. Under this On-Duty condition, it is impossible to draw a trajectory such that the average output current is 8 A (reference sign 73). That is, under the condition that the average output current is 8 A, the class-E power conversion circuit 20 cannot operate. In FIG. 3, similarly to FIG. 2, it can be seen that the switch driving frequency of the class-E power conversion circuit 20 is required to be shifted to a lower frequency as the average output current increases to 2 A (reference sign 70), 4 A (reference sign 71), and 6 A (reference sign 72). Comparing the zero voltage switching region (region 81) in FIG. 2 with the zero voltage switching region (region 81) in FIG. 3, it can be seen that the zero voltage switching region (region 81) can be shifted to a high frequency when the On-Duty is changed from 0.55 to a smaller 0.45. This is the operation revealed by the inventors of the present invention. In FIG. 3, a part of an operation trajectory having an average output current of 6 A (reference sign 72) passes through the region 80 in which the zero voltage switching cannot be established, and therefore the zero voltage switching cannot be established in all regions in response to changes in AC voltage. On the other hand, an operation trajectory having an average output current of 4 A (reference sign 71) and 2 A (reference sign 70) passes through a region 81 in which the zero voltage switching can be established between 0 V and 283 V, and by changing the On-Duty from 0.55 to 0.45, it is possible to establish the zero voltage switching in all regions in response to changes in AC voltages even under conditions of average output currents of 2 A and 4 A, in which the zero voltage switching could not be established in all regions when the On-Duty is 0.55.

In the class-E power conversion circuit 20 according to the first embodiment, when an operation state in which the average output current is 8 A, the On-Duty is 0.55, and the zero voltage switching is established in all regions of an AC voltage variation range from 0 V to 283 V is changed to a state in which the average output current is 2 A, the drive frequency of the switch 32 is changed to a higher frequency in order to reduce the average value of the output current. A new operation in which the zero voltage switching region can be shifted to a higher frequency when the On-Duty is reduced can be used. For example, when the On-Duty is reduced from 0.55 to 0.45, even under the condition that the average output current is 2 A, the zero voltage switching can be established in all regions of the voltage variation range from 0 V to 283 V AC.

[Operation and Effect]

As described above, according to the power conversion device 100 according to the first embodiment, the following operation and effect can be obtained.

The class-E power conversion circuit 20 has the class-E inverter circuit 30 and the rectifier circuit 40 connected to the class-E inverter circuit 30 and rectifying the high-frequency alternating current generated by the class-E inverter circuit 30 to a direct current or a low-frequency AC voltage. The class-E inverter circuit 30 includes the AC voltage input unit 10 into which an AC voltage is input, the switch 32 for switching the current on/off, the input choke inductor 31 connected to at least one end of the switch 32 and the AC voltage input unit 10, and the LC resonance circuit 34 connected to the rectifier circuit 40. The control unit 50 sets the On-Duty of the switch 32 based on the output current or output power output from the class-E power conversion circuit 20. In the class-E power conversion circuit 20 connected to the AC voltage, when a larger power or current is required to be output, for example, when the output voltage drops due to a variation in the load 1 or the control unit 50 is instructed to supply a larger power from the outside, the control trajectory of the switch driving frequency of the class-E power conversion circuit 20 tends to shift to a lower frequency. In the class-E power conversion circuit 20 connected to the AC voltage, when the On-Duty of the switch 32 is increased, the region in which the zero voltage switching is established shifts to a lower frequency. Therefore, it is possible to establish the zero voltage switching in a wide range of the output current or the output power and to reduce the loss by detecting the magnitude of the output power or the output current and increasing the On-Duty of the switch 32 when the output power increases.

Further, the controller 50 may set the On-Duty based on the measured value of the output current or the output power output from the class-E power conversion circuit 20. In an application in which the current drawn by the load 1 connected to the power conversion device 100 is determined independent of the state of the power conversion device 100, it is possible to set the On-Duty that is suitable under the operating conditions of the actual class-E power conversion circuit 20 at that point by setting the On-Duty based on a measured value of the output power or the output current. Thus, even in a transient state in which a fluctuation of the load current occurs, the zero voltage switching can be maintained, and the loss can be reduced.

In the first embodiment, the output current is detected, and the On-Duty is set based on the detected output current. However, the same effect can be obtained when the output voltage is detected separately, and the On-Duty is set based on the output power obtained by multiplying the output voltage and the output current.

[Second embodiment]

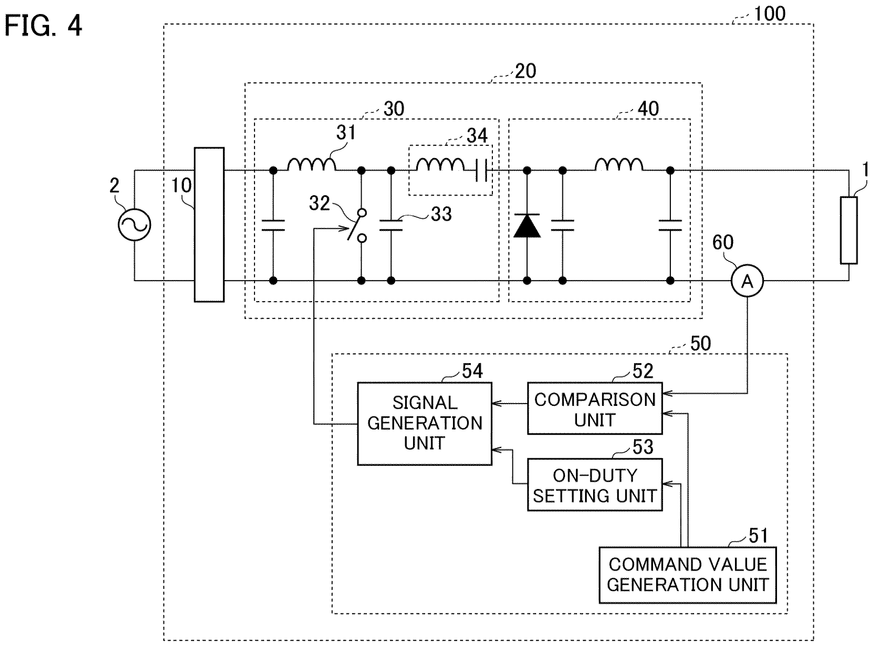

Next, a second embodiment of the present invention will be described with reference to FIG. 4. The second embodiment differs from the first embodiment in that the On-Duty setting unit 53 sets the On-Duty based on the command value (command value of the output current) acquired from the command value generation unit 51. The description of the configuration overlapping with the first embodiment is omitted by referring to the reference signs. The following description will focus on the differences.

In the second embodiment, On-Duty of the switch control signal of the class-E power conversion circuit 20 is set based on the command value of the output current. For example, when the power conversion device 100 is used for an application such as a battery charger, the load 1 is connected to the output of the power conversion device 100, such as a battery with a very stable voltage. At this time, the output voltage of the power conversion device 100 is dominantly determined by the state of the load 1, and the power conversion device 100 controls the output current or output power. For example, when the power conversion device 100 controls the output current as shown in FIG. 4, the control unit 50 sets the current value that should be supplied to the load 1 as the output current command value, and generates a control signal so that the output current measurement value and the output current command value become the value. However, when controlling the output current in an application such as a battery charger, the cutoff frequency of the current sensor 60 for detecting the output current can be controlled even at a frequency as low as, for example, 1/100 compared to the frequency of the switch control signal of the class-E power conversion circuit 20. Since it is sufficient to be higher than 100 Hz, the cutoff frequency of about 10 kHz can be controlled, and when the class-E power conversion circuit 20 is operated at, for example, 1 MHz, the relationship between these frequencies is about 1 to 100. However, when a current sensor with such a low cutoff frequency is used, the measured value has a great delay with respect to the current value of the output current. In the second embodiment, by setting the On-Duty based on the output current command value, it is possible to establish the zero voltage switching without using an expensive current sensor and without affected by the delay of the measured value.

As described above, in the second embodiment, the control unit 50 sets the On-Duty based on the command value of the output current or output power. In an application such as a battery charger in which the power conversion device 100 itself controls the current or power supplied to the load 1, by setting the On-Duty based on the command value of the output current or output power, the On-Duty can be set in advance by performing control to change the output current or output power of the class-E power converter 20. Without being affected by the delay in detection of the output current or output power, the zero voltage switching can be maintained and the loss can be reduced. In addition, there is no need to use a current sensor or a voltage sensor which can detect up to a high frequency band for detecting the fluctuation of the output current or output power, thereby contributing to the cost reduction.

[Third Embodiment]

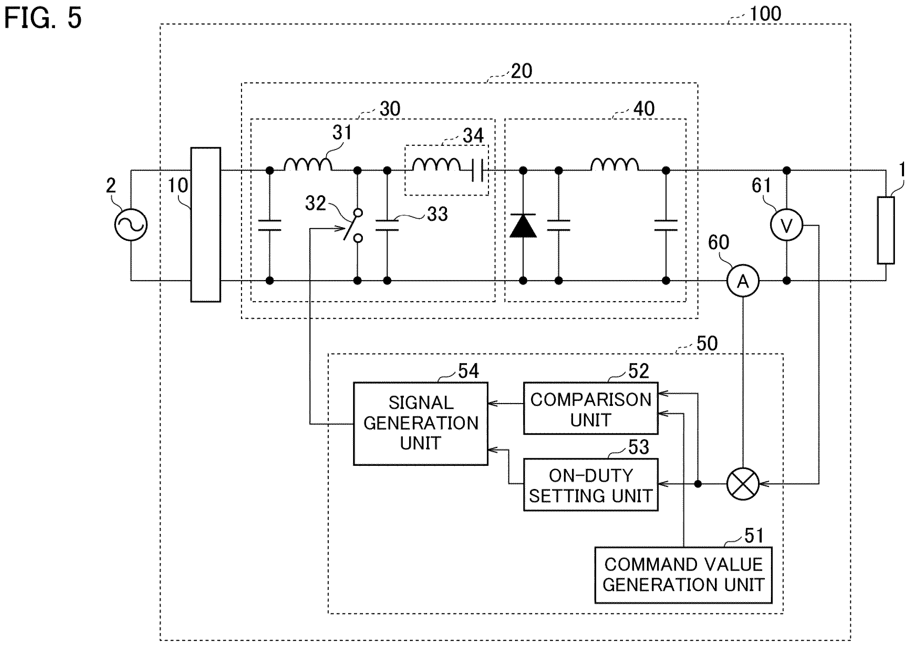

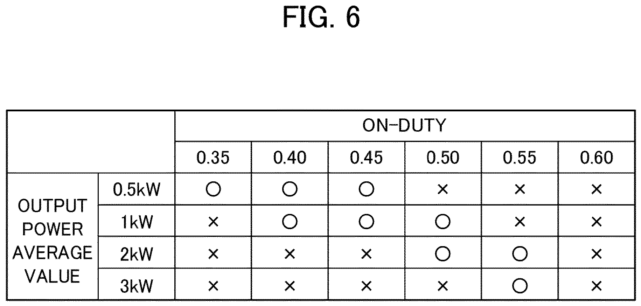

Next, a third embodiment of the present invention will be described with reference to FIGS. 5 and 6. The power conversion device 100 according to the third embodiment has a voltage sensor 61 as shown in FIG. 5. The On-Duty setting unit 53 sets the On-Duty of the switch control signal of the class-E power conversion circuit 20 based on the output power that is a product of the output voltage of the class-E power conversion circuit 20 detected by the voltage sensor 61 and the output current of the class-E power conversion circuit 20 detected by the current sensor 60.

FIG. 6 is a map of the class-E power conversion circuit 20 according to the third embodiment, in which it is evaluated whether the zero voltage switching can be established in all regions within the variation range of AC input voltage with respect to the value of On-Duty and the average value of output power. Referring to the map shown in FIG. 6, the power conversion device 100 according to the third embodiment sets the On-Duty so that the zero voltage switching can be established at a present output power average value. Thus, it is possible to set a suitable On-Duty which can reduce the turn-on loss of the present average output power. The map of FIG. 6 will be described below. The average output power is shown at 0.5 kW, 1 kW, 2 kW and 3 kW. The values of the On-Duty are shown at 0.35, 0.40, 0.45, 0.50, 0.55 and 0.60. A map in Fig. 6 is the map when the average output power is evaluated in combination with On-Duty. This evaluation is carried out in advance. The evaluation is performed by changing the average output power and the On-Duty in a wider range with higher resolution in the range in which the power conversion device 100 may be used and creating a map in advance, so that a more suitable On-Duty can be set in the evaluation. Furthermore, when the output power average value is a value between the resolutions of the output power average value of the map evaluated in advance, it is possible to set the On-Duty with a high probability that the zero voltage switching can be established in all regions within the variation range of the AC input voltage by interpolating the value.

As described above, in the third embodiment, the control unit 50 sets the On-Duty based on a relationship between the output current or the output power, and whether the zero voltage switching is achievable. Specifically, the control unit 50 sets the value of the On-Duty so that the zero voltage switching can be achieved in all regions of an input voltage range under the output power condition under which the class-E power conversion circuit 20 is at present operating, based on the relationship obtained by evaluating in advance whether the zero voltage switching can be established with respect to the average output power value and the value of the On-Duty. Thus, even if the output voltage of the class-E power conversion circuit 20 changes, the zero voltage switching can be maintained in a wide range within the variation range of the AC voltage, thereby reducing the loss.

[Fourth Embodiment]

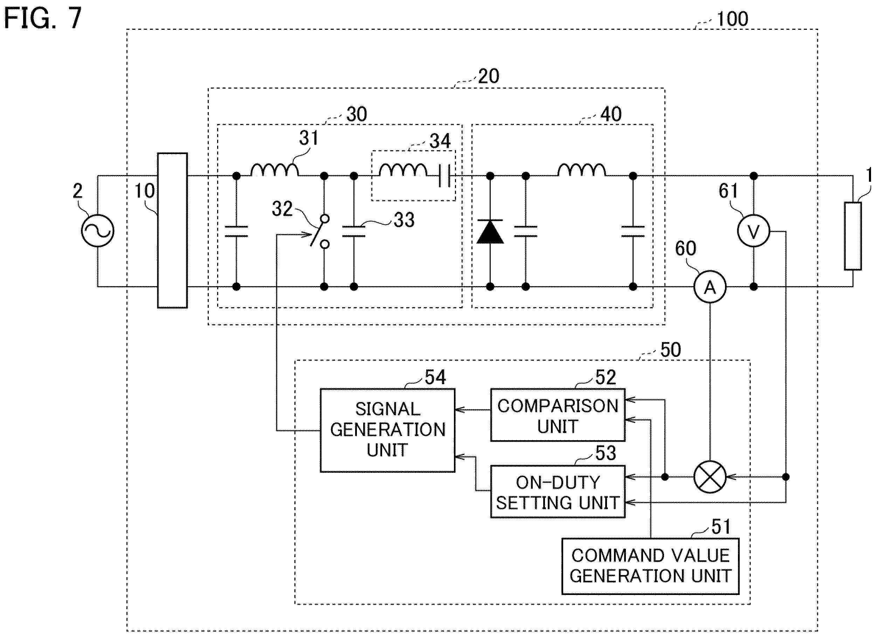

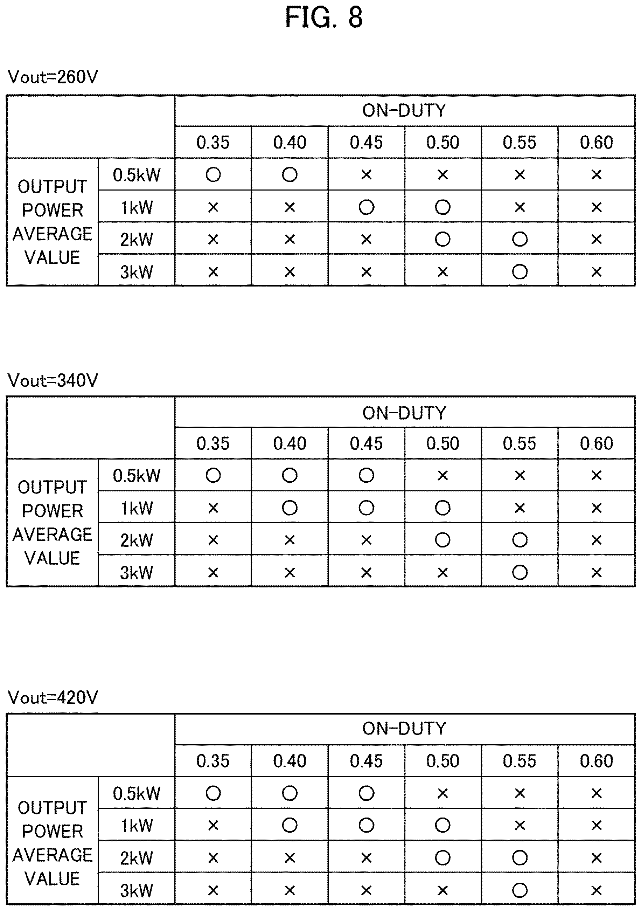

Next, a fourth embodiment of the present invention will be described with reference to FIGS. 7 and 8. As shown in FIG. 7, the power conversion device 100 according to the fourth embodiment sets the On-Duty of the switch control signal of the class-E power conversion circuit 20 based on the output power that is the product of the output current and the output voltage of the class-E power conversion circuit 20 and the output voltage of the class-E power conversion circuit 20. FIG. 8 is a map of the class-E power conversion circuit 20 according to the fourth embodiment, in which it is evaluated whether the zero voltage switching can be established in all regions within the variation range of the AC input voltage for the output DC voltage (Vout=260 V, 340 V, 420 V), the value of the On-Duty, and the output power average value. As shown in FIG. 8, when the output voltage of the class-E power conversion circuit 20 changes, the On-Duty that can establish the zero voltage switching in all regions within the variation range of the AC input voltage changes, even if the output power average value is the same. In the power conversion device 100 according to the fourth embodiment, the On-Duty is set based of a map in which whether the zero voltage switching can be established is evaluated in advance not only for the output current but also for the output voltage. Thus, it is possible to set a suitable On-Duty that can reduce the turn-on loss of the average output power at present even when the output voltage changes.

For example, when the output voltage Vout is 340 V and the output power average value is 0.5 kW, the zero voltage switching is established in all regions within the variation range of the AC input voltage by setting the On-Duty to 0.45. On the other hand, when the output voltage Vout is 260 V and the output power average value is 0.5 kW, the zero voltage switching is not established in some regions within the variation range of the AC input voltage by setting the On-Duty to 0.45. When the On-Duty is changed to, for example, 0.40 under the condition that the output voltage Vout is 260 V, it is possible to establish the zero voltage switching within the variation range of the AC input voltage even in the operation trajectory in which the output power average value is 0.5 kW.

FIG. 8 shows, as an example, a map for evaluating combinations of the output voltage Vout of 260 V, 340 V, and 420 V, the average output power of 0.5 kW, 1 kW, 2 kW, and 3 kW, and the On-Duty of 0.35, 0.40, 0.45, 0.50, 0.55, and 0.60. The evaluation is performed by changing the average output power and the On-Duty in a wider range with higher resolution in the range in which the power conversion device 100 may be used and creating a map in advance, so that a more suitable On-Duty can be set in the evaluation. Furthermore, when the output voltage and the output power average value are a value between the resolutions of the map evaluated in advance, it is possible to set the On-Duty with a high probability that the zero voltage switching can be established in all regions within the variation range of the AC input voltage by interpolating the value.

As described above, in the fourth embodiment, the control unit 50 sets the On-Duty based on the output voltage output from the class-E power conversion circuit 20. In the class-E power conversion circuit 20 connected to the AC voltage, the control unit 50 sets the value of the On-Duty based on the output voltage when the regions of zero voltage switching and the trajectory of the control frequency change depending on the output voltage. Thus, it is possible to set a suitable On-Duty at the present output voltage, and the zero voltage switching can be maintained even when the output voltage changes, thereby reducing the loss.

The control unit 50 may set the On-Duty based on a relationship between the output voltage, the output current or the output power, and whether the zero voltage switching can be established. Thus, even if the output voltage and the output power of the class-E power conversion circuit 20 change, the zero voltage switching can be maintained in a wide range within the variation range of the AC voltage, thereby reducing the loss.

[Fifth embodiment]

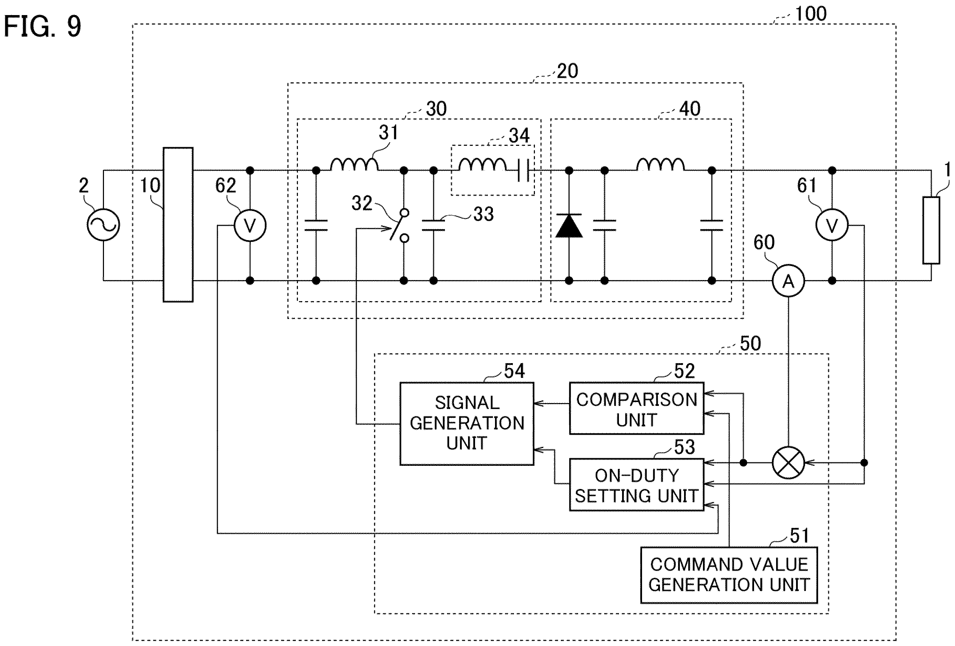

Next, a fifth embodiment of the present invention will be described with reference to FIGA. 9 and 10. The power conversion device 100 according to the fifth embodiment has a voltage sensor 61 and a voltage sensor 62 as shown in FIG. 9. In the fifth embodiment, in addition to the output current of the class-E power conversion circuit 20 and the output voltage of the class-E power conversion circuit 20, the AC input voltage of the class-E power conversion circuit 20 is also taken into consideration to set the On-Duty of the switch control signal of the class-E power conversion circuit 20.

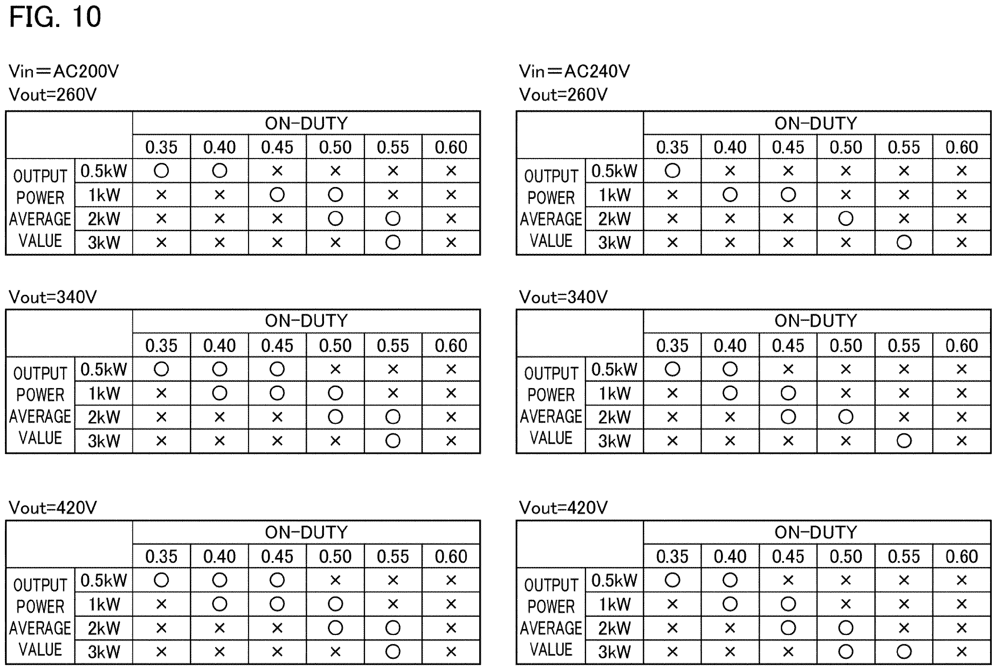

FIG. 10 is a map of the class-E power conversion circuit 20 according to the fifth embodiment, in which it is evaluated whether the zero voltage switching can be established in all regions within the variation range of the AC input voltage for the AC input voltage (Vin=AC 200 V, 240 V), the output DC voltage (Vout=260 V, 340 V, 420 V), the value of the On-Duty, and the output power average value.

As shown in FIG. 10, when the AC input voltage of the class-E power conversion circuit 20 changes, the On-Duty that can establish the zero voltage switching in all regions within the variation range of the AC input voltage changes, even if the output voltage and the output power average value are the same. In the power conversion device 100 according to the fifth embodiment, the On-Duty is set based on a map in which whether the zero voltage switching can be established is evaluated in advance not only for the output power and the output voltage but also for the AC input voltage. Thus, it is possible to set a suitable On-Duty that can reduce the turn-on loss at the present average output power even when the output voltage changes.

For example, when connected to a power system with AC input voltage Vin=AC200 V, the On-Duty is set to 0.50 with the output voltage Vout of 340 V and the output power average value of 1 kW to be operated in all regions within the variation range of the AC input voltage operates in the establishment regions of the zero voltage switching. On the other hand, if the ON duty is similarly operated at 0.50 when the power system is connected to the AC input voltage Vin= 240 V AC, and the output voltage Vout is 340 V and the average output power value is 1 kW, there is a region where 0 voltage switching is not established within the variation range of the AC input voltage. When the On-Duty is changed to 0.45 under the condition of the AC input voltage Vin=AC100 V and the output voltage Vout=340 V, the zero voltage switching region can be established within the variation range of the AC input voltage in the operation trajectory with the output power average value of 1 kW.

FIG. 10 shows, as an example, a map for evaluating combinations of the AC input voltage Vin of AC200 V and AC240 V, the output voltage Vout of 260 V, 340 V, 420 V, the average output power of 0.5 kW, 1 kW, 2 kW, and 3 kW, and the On-Duty of 0.35, 0.40, 0.45, 0.50, 0.55, and 0.60. The evaluation is performed by changing the average output power and the On-Duty in a wider range with higher resolution in the range in which the power conversion device 100 may be used and creating a map in advance, so that a more suitable On-Duty can be set in the evaluation. Furthermore, when the output voltage and the output power average value are a value between the resolutions of the map evaluated in advance, it is possible to set the On-Duty with a high probability that the zero voltage switching can be established in all regions within the variation range of the AC input voltage by interpolating the value.

As described above, in the fifth embodiment, the control unit 50 sets the On-Duty based on an AC voltage value input to the AC voltage input unit 10. In the class-E power conversion circuit 20 connected to the AC voltage, when the region of the zero voltage switching and the trajectory of the control frequency change depending on the value of the AC input voltage, the control unit 50 sets the On-Duty based on the AC input voltage. As a result, a suitable On-Duty can be set with the value of the present AC input voltage. Even when connected to different AC input voltages depending on the country, region, and the like, the zero voltage switching can be established, thereby reducing the loss.

The control unit 50 may set the On-Duty based on a relationship between the AC voltage value input to the AC voltage input unit 10, the output current or output power, and whether the zero voltage switching can be established. Thus, even if the AC input voltage of the class-E power conversion circuit 20 changes, the zero voltage switching can be established in a wide range within the variation range of the AC voltage, thereby reducing the loss.

Embodiments of the present invention are described as above, but it should not be understood that the description and drawings that form part of this disclosure are intended to limit the present invention. The disclosure will reveal to those skilled in the art a variety of alternative embodiments, examples, and operating techniques.

LIST OF REFERENCE NUMERALS

100 Power conversion device
10 AC voltage input unit
20 Class-E power conversion circuit
30 Class-E inverter circuit
31 Input choke inductor
32 Switch
33 Shunt capacitor
34 LC resonant circuit
40 Rectifier circuit
50 Control unit

**Claims**

1. A power conversion method for a power conversion device having a class-E power conversion circuit, wherein:

the class-E power conversion circuit has a class-E inverter circuit and a rectifier circuit connected to the class-E inverter circuit and rectifying a high-frequency alternating current generated by the class-E inverter circuit to a direct current or a low-frequency AC voltage;
the class-E inverter circuit comprises an AC voltage input unit into which an AC voltage is input, a switch for switching the current on/off, an input choke inductor connected to at least one end of the switch and the AC voltage input unit, and an LC resonance circuit connected to the rectifier circuit; comprising

setting an On-Duty of the switch based on an output current or output power output from the class-E power conversion circuit.

2. The power conversion method according to claim 1, comprising increasing the On-Duty as the output current or the output power is increased.

3. The power conversion method according to claim 1 or 2, comprising setting the On-Duty based on a measured value of the output current or the output power.

4. The power conversion method according to claim 1 or 2, comprising setting the On-Duty based on a command value of the output current or the output power.

5. The power conversion method according to any one of claims 1 to 4, comprising setting the On-Duty based on a relationship between the output current or the output power, and whether the zero voltage switching is achievable.

6. The power conversion method according to any one of claims 1 to 5, comprising setting the On-Duty based on an output voltage output from the class-E power conversion circuit.

7. The power conversion method according to claim 6, comprising setting the On-Duty based on a relationship between the output voltage, the output current or the output power, and whether the zero voltage switching is achievable.

8. The power conversion method according to any one of claims 1 to 7, comprising setting the On-Duty based on an AC voltage value input to the AC voltage input unit.

9. The power conversion method according to claim 8, comprising setting the On-Duty based on a relationship between the AC voltage value, the output current or the output power, and whether the zero voltage switching can be established.

10. A power conversion device having a class-E power conversion circuit, wherein:

the class-E power conversion circuit has a class-E inverter circuit and a rectifier circuit connected to the class-E inverter circuit and rectifying a high-frequency alternating current generated by the class-E inverter circuit to a direct current or a low-frequency AC voltage;

the class-E inverter circuit comprises an AC voltage input unit into which an AC voltage is input, a switch for switching the current on/off, an input choke inductor connected to at least one end of the switch and the AC voltage input unit, and an LC resonance circuit connected to the rectifier circuit; and

an On-Duty of the switch is set based on an output current or output power output from the class-E power conversion circuit.

FIG. 1

EP 4 485 785 A1

# FIG. 2

ON-DUTY : 0.55

# FIG. 3

ON-DUTY : 0.45

FIG. 4

FIG. 5

# FIG. 6

| | | ON-DUTY | | | | | |
|---|---|---|---|---|---|---|---|
| | | 0.35 | 0.40 | 0.45 | 0.50 | 0.55 | 0.60 |
| OUTPUT POWER AVERAGE VALUE | 0.5kW | ○ | ○ | ○ | × | × | × |
| | 1kW | × | ○ | ○ | ○ | × | × |
| | 2kW | × | × | × | ○ | ○ | × |
| | 3kW | × | × | × | × | ○ | × |

FIG. 7

EP 4 485 785 A1

# FIG. 8

Vout=260V

| | | ON-DUTY | | | | | |
|---|---|---|---|---|---|---|---|
| | | 0.35 | 0.40 | 0.45 | 0.50 | 0.55 | 0.60 |
| OUTPUT POWER AVERAGE VALUE | 0.5kW | ○ | ○ | × | × | × | × |
| | 1kW | × | × | ○ | ○ | × | × |
| | 2kW | × | × | × | ○ | ○ | × |
| | 3kW | × | × | × | × | ○ | × |

Vout=340V

| | | ON-DUTY | | | | | |
|---|---|---|---|---|---|---|---|
| | | 0.35 | 0.40 | 0.45 | 0.50 | 0.55 | 0.60 |
| OUTPUT POWER AVERAGE VALUE | 0.5kW | ○ | ○ | ○ | × | × | × |
| | 1kW | × | ○ | ○ | ○ | × | × |
| | 2kW | × | × | × | ○ | ○ | × |
| | 3kW | × | × | × | × | ○ | × |

Vout=420V

| | | ON-DUTY | | | | | |
|---|---|---|---|---|---|---|---|
| | | 0.35 | 0.40 | 0.45 | 0.50 | 0.55 | 0.60 |
| OUTPUT POWER AVERAGE VALUE | 0.5kW | ○ | ○ | ○ | × | × | × |
| | 1kW | × | ○ | ○ | ○ | × | × |
| | 2kW | × | × | × | ○ | ○ | × |
| | 3kW | × | × | × | × | ○ | × |

FIG. 9

EP 4 485 785 A1

# FIG. 10

Vin＝AC200V
Vout=260V

| OUTPUT POWER AVERAGE VALUE | | ON-DUTY | | | | | |
|---|---|---|---|---|---|---|---|
| | | 0.35 | 0.40 | 0.45 | 0.50 | 0.55 | 0.60 |
| OUTPUT POWER AVERAGE VALUE | 0.5kW | O | O | × | × | × | × |
| | 1kW | × | × | O | O | × | × |
| | 2kW | × | × | × | O | O | × |
| | 3kW | × | × | × | × | O | × |

Vin＝AC240V
Vout=260V

| OUTPUT POWER AVERAGE VALUE | | ON-DUTY | | | | | |
|---|---|---|---|---|---|---|---|
| | | 0.35 | 0.40 | 0.45 | 0.50 | 0.55 | 0.60 |
| OUTPUT POWER AVERAGE VALUE | 0.5kW | O | × | × | × | × | × |
| | 1kW | × | O | O | × | × | × |
| | 2kW | × | × | × | O | × | × |
| | 3kW | × | × | × | × | O | × |

Vout=340V

| OUTPUT POWER AVERAGE VALUE | | ON-DUTY | | | | | |
|---|---|---|---|---|---|---|---|
| | | 0.35 | 0.40 | 0.45 | 0.50 | 0.55 | 0.60 |
| OUTPUT POWER AVERAGE VALUE | 0.5kW | O | O | O | × | × | × |
| | 1kW | × | O | O | O | × | × |
| | 2kW | × | × | × | O | O | × |
| | 3kW | × | × | × | × | O | × |

Vout=340V

| OUTPUT POWER AVERAGE VALUE | | ON-DUTY | | | | | |
|---|---|---|---|---|---|---|---|
| | | 0.35 | 0.40 | 0.45 | 0.50 | 0.55 | 0.60 |
| OUTPUT POWER AVERAGE VALUE | 0.5kW | O | O | × | × | × | × |
| | 1kW | × | O | O | × | × | × |
| | 2kW | × | × | O | O | × | × |
| | 3kW | × | × | × | × | O | × |

Vout=420V

| OUTPUT POWER AVERAGE VALUE | | ON-DUTY | | | | | |
|---|---|---|---|---|---|---|---|
| | | 0.35 | 0.40 | 0.45 | 0.50 | 0.55 | 0.60 |
| OUTPUT POWER AVERAGE VALUE | 0.5kW | O | O | O | × | × | × |
| | 1kW | × | O | O | O | × | × |
| | 2kW | × | × | × | O | O | × |
| | 3kW | × | × | × | × | O | × |

Vout=420V

| OUTPUT POWER AVERAGE VALUE | | ON-DUTY | | | | | |
|---|---|---|---|---|---|---|---|
| | | 0.35 | 0.40 | 0.45 | 0.50 | 0.55 | 0.60 |
| OUTPUT POWER AVERAGE VALUE | 0.5kW | O | O | × | × | × | × |
| | 1kW | × | O | O | × | × | × |
| | 2kW | × | × | O | O | × | × |
| | 3kW | × | × | × | O | O | × |

EP 4 485 785 A1

**EP 4 485 785 A1**

<table>
<tr><td colspan="2">INTERNATIONAL SEARCH REPORT</td><td>International application No.</td></tr>
<tr><td colspan="2"></td><td>**PCT/IB2022/000092**</td></tr>
</table>

**A. CLASSIFICATION OF SUBJECT MATTER**

*H02M 7/48*(2007.01)i
FI: H02M7/48 P

According to International Patent Classification (IPC) or to both national classification and IPC

**B. FIELDS SEARCHED**

Minimum documentation searched (classification system followed by classification symbols)

H02M7/48, H02M3/155

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2019/202352 A1 (NISSAN MOTOR CO., LTD.) 24 October 2019 (2019-10-24) paragraphs [0010]-[0046], fig. 1-8 | 1-3, 6, 8, 10 |
| A | paragraphs [0010]-[0046], fig. 1-8 | 4, 5, 7, 9 |
| Y | JP 2013-30973 A (NIPPON SOKEN INC.) 07 February 2013 (2013-02-07) paragraphs [0029]-[0034], fig. 1 | 1-3, 6, 8, 10 |
| A | paragraphs [0029]-[0034], fig. 1 | 4, 5, 7, 9 |
| A | JP 2016-27709 A (QUALCOMM, INC.) 18 February 2016 (2016-02-18) entire text, all drawings | 1-10 |
| A | JP 2009-508458 A (KONINKLIJKE PHILIPS ELECTRONICS N.V.) 26 February 2009 (2009-02-26) entire text, all drawings | 1-10 |
| A | JP 2005-204405 A (DAIHEN CORP.) 28 July 2005 (2005-07-28) entire text, all drawings | 1-10 |

☑ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **17 June 2022** | **28 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
| --- |
| **PCT/IB2022/000092** |

| C. | DOCUMENTS CONSIDERED TO BE RELEVANT | |
| --- | --- | --- |
| Category* | Citation of document, with indication, where appropriate, of the relevant passages | Relevant to claim No. |
| A | JP 2015-211393 A (ASAHI KASEI ELECTRONICS CO., LTD.) 24 November 2015 (2015-11-24)<br>entire text, all drawings | 1-10 |

Form PCT/ISA/210 (second sheet) (January 2015)

**INTERNATIONAL SEARCH REPORT**
**Information on patent family members**

International application No.

**PCT/IB2022/000092**

| Patent document cited in search report | | | Publication date (day/month/year) | Patent family member(s) | | | Publication date (day/month/year) |
|---|---|---|---|---|---|---|---|
| WO | 2019/202352 | A1 | 24 October 2019 | US | 2021/0044218 | A1 | |
| | | | | paragraphs [0036]-[0072], fig. 1-8 | | | |
| | | | | EP | 3783789 | A1 | |
| | | | | CN | 112272916 | A | |
| JP | 2013-30973 | A | 07 February 2013 | US | 2014/0175868 | A1 | |
| | | | | paragraphs [0046]-[0051], fig. 1 | | | |
| | | | | WO | 2013/014521 | A1 | |
| JP | 2016-27709 | A | 18 February 2016 | JP | 2014-531788 | A | |
| | | | | US | 2013/0043951 | A1 | |
| | | | | entire text, all drawings | | | |
| | | | | WO | 2013/025623 | A2 | |
| | | | | EP | 3024140 | A1 | |
| | | | | CN | 103765767 | A | |
| JP | 2009-508458 | A | 26 February 2009 | US | 2009/0129134 | A1 | |
| | | | | entire text, all drawings | | | |
| | | | | WO | 2007/031914 | A1 | |
| | | | | CN | 101263648 | A | |
| JP | 2005-204405 | A | 28 July 2005 | (Family: none) | | | |
| JP | 2015-211393 | A | 24 November 2015 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018196271 A